## Europäisches Patentamt

## European Patent Office

## Office européen des brevets

(19)

(11) Numéro de publication: **0 269 930**
**B1**

(12) # FASCICULE DE BREVET EUROPEEN

(45) Date de publication du fascicule du brevet:
**07.11.90**

(51) Int. Cl.⁵: **C21B 7/18, B65D 90/66**

(21) Numéro de dépôt: **87116770.6**

(22) Date de dépôt: **13.11.87**

(54) **Mécanisme pour actionner un clapet de dosage.**

(30) Priorité: **21.11.86 LU 86679**

(43) Date de publication de la demande:
**08.06.88 Bulletin 88/23**

(45) Mention de la délivrance du brevet:
**07.11.90 Bulletin 90/45**

(84) Etats contractants désignés:
**AT BE DE ES FR GB IT NL SE**

(56) Documents cités:
**EP-A- 0 134 918**
**FR-A- 2 154 803**
**GB-A- 1 175 179**

(73) Titulaire: **PAUL WURTH S.A., 32 rue d'Alsace,
L-1122 Luxembourg(LU)**

(72) Inventeur: **Lonardi, Emile, 30 rue de Schouweiler,
L-Bascharage(LU)**

(74) Mandataire: **Meyers, Ernest et al, Office de Brevets
FREYLINGER & ASSOCIES B.P. 1 321, route d'Arlon,
L-8001 Strassen(LU)**

## Description

La présente invention concerne un dispositif de réglage de l'ouverture d'écoulement d'une tubulure verticale, comprenant un clapet de dosage constitué de deux registres rotatifs en forme de calotte sphérique ou cylindrique pourvus de découpes symétriques par rapport à l'axe d'une ouverture centrale définie par le mouvement des registres et de leur découpes, ces registres étant solidaires de deux arbres d'entraînement disposés l'un coaxialement par rapport à l'autre et logés dans les paliers de la tubulure pour actionner, par pivotement autour de leur axe commun , chacun des registres en synchronisme et en sens opposé, et comprenant deux bras respectivement solidaires de chacun des deux arbres et articulé , chacun, par l'intermédiaire d'une bielle , sur un levier culbuteur , monté sur un axe de pivotement parallèle à l'axe commun des deux arbres , ces leviers culbuteurs étant reliés à un dispositif d'entraînement pour les faire pivoter autour de leur axe de pivotement et dans lequel l'articulation entre l'un des leviers culbuteur et sa bielle est décalé angulairement autour dudit axe de pivotement par rapport à l'articulation entre l'autre levier culbuteur et sa bielle.

Un dispositif de ce genre est décrit dans le brevet européen no. 0 134 918 pour régler l'écoulement de la matière de chargement hors d'une enceinte de stockage disposée sur l'axe central d'une installation de chargement d'un four à cuve. Ce document préconise une commande des registres de manière que l'ouverture d'écoulement délimitée par ceux-ci soit modifiée symétriquement par rapport à l'axe central .

La mise en oeuvre de ce système de dosage a montré une certaine irrégularité du niveau à la surface de chargement du four. Cette irrégularité a d'ailleurs été confirmée par des essais qui, en outre, ont montré que ces irrégularités proviennent d'un désaxement , par rapport à l'axe vertical du courant de la matière de chargement s'écoulant à travers une ouverture symétrique définie entre les deux registres. Certes, ce désaxement est très faible et son effet sur le profil de chargement est variable suivant la position angulair de la goulotte. Par contre, étant donné que les mêmes effets se produisent toujours dans les mêmes positions angulaires (vues en plan) de la goulotte, l'accumulation de ces irrégularités au fur et à mesure des dépôts de couches successives provoquent finalement une déviation non négligeable du profil du niveau de chargement que l'on vise à obtenir.

Il a été constaté que l'origine de ce désaxement du courant d'écoulement était à rechercher dans les différences de courbures des calottes des deux registres étant donné que l'un d'eux doit forcément avoir un rayon supérieur à l'autre. Ce phénomène de désaxement sera d'ailleurs décrit plus en détail par la suite en référence aux figures.

Le but de la présente invention est de prévoir un dispositif perfectionné qui pérmet l'élimination de ce désaxement , quelles que soient les positions angulaires des deux registres.

Pour atteindre cet objectif, l'invention propose un dispositif du genre décrit dans le préambule qui, dans un mode de réalisation préféré, est essentiellement caractérisé en ce que l'une des bielles est ajustable en longueur.

L'ajustement de cette bielle est, de préférence, réalisé par un vérin hydraulique incorporé dans cette bielle.

L'invention prévoit en outre un circuit de commande comprenant un détecteur de la position angulaire du clapet dont la bielle n'est pas ajustable, un détecteur de la position réelle du vérin , un comparateur pour comparer la position réelle du vérin à une position de consigne mémorisée en fonction des positions angulaires, une vanne hydraulique commandée en fonction du résultat de la comparaison effectuée par le comparateur pour actionner le vérin jusqu'à ce que la position réelle de celui-ci corresponde à la position de consigne.

Ce dispositif permet, par conséquent, de modifier automatiquement la position angulaire de l'un des registres par rapport à celle de l'autre registre pour que l'écoulement se fasse suivant l'axe central.

D'autres particularités et caractéristiques ressortiront de la description détaillée d'un mode de réalisation préféré, présenté ci-dessous, à titre d'illustration , en référence aux dessins annexés dans lesquels :

la figure 1 est une vue en coupe verticale à travers un clapet de dosage actionné selon l'état de la technique ;

la figure 2 représente le clapet de la figure 1 en projection horizontale ;

les figures 3 et 4 représentent des vues analogues à celles des figures 1 et 2 d'un clapet actionné par le mécanisme proposé par la présente invention;

les figures 5 et 6 montrent deux vues latérales du mécanisme proposé par la présente invention , dans des positions angulaires différentes du clapet de dosage ;

la figure 7 montre une vue en perspective du mécanisme pour actionner le clapet de dosage et

la figure 8 représente un schéma synoptique de la commande du mécanisme pour actionner le clapet de dosage.

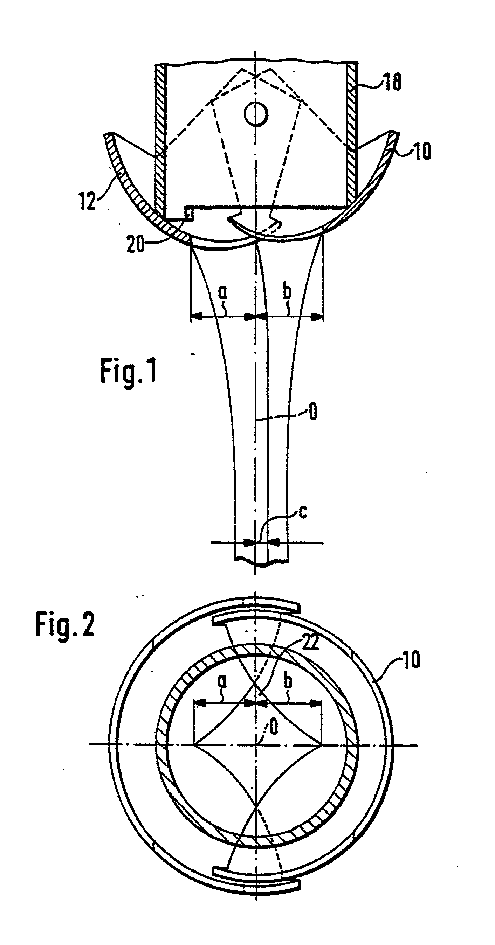

Les figures 1 et 2 montrent un clapet de dosage classique tel que proposé par le brevet européen susmentionné. Ce clapet comporte deux registres 10 et 12 en forme de calotte sphérique pouvant pivoter, en sens opposé, autour d'un axe commun en-dessous d'une tubulure d'écoulement 18. Les deux registres 10 et 12 comportent des découpes triangulaires et le mécanisme pour actionner ces registres est conçu de manière à faire pivoter les registres en sens opposé pour former une ouverture d'écoulement 22, sensiblement en forme de carreau , parfaitement symétrique par rapport à l'axe central O, c'est-à-dire que les distances horizontales a et b du fond de chacune des découpes des registres à l'axe central O sont égales entre elles, quelle que soit la position angulaire des registres 10 et 12. Des essais ont montré , comme le montre la figure 1, qu'une ouverture symétrique occasionne un écoulement 10 dissymétrique dans la mesure où le courant d'écoulement est désaxé d'une distance c de l'axe central O. Ce décalage semble provenir du fait que les registres doivent avoir des rayons de courbure différents. Dans l'exemple représenté, c'est le registre 12 qui possède le plus grand rayon de courbure , ce qui est visible au gradin 20 du bord inférieur de la tubulure 18. La courbure du registre 12 est donc moins forte que celle du registre 10. Comme le montre la figure 1, le décalage du courant d'écoulement se fait du côté opposé par rapport au registre ayant le plus grand rayon de courbure. Il semble donc que le registre à petit rayon exerce un plus grand freinage ou, inversement, que le registre à grand rayon de courbure contribue à un écoulement plus fluide.

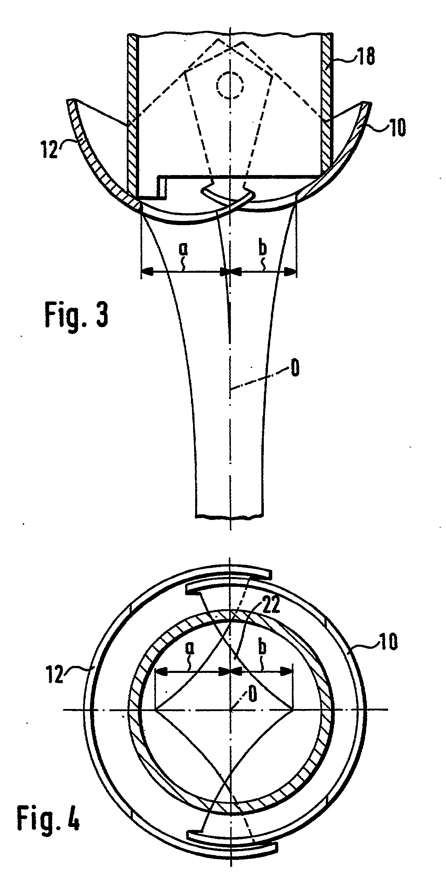

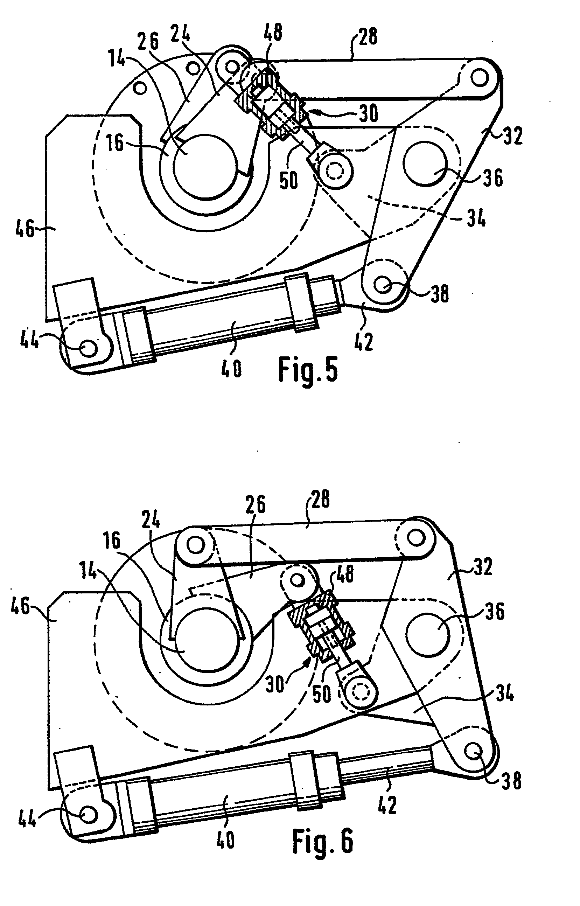

Pour éliminer ce phénomène, la présente invention propose , conformément aux figures 3 et 4, d'augmenter l'angle d'ouverture de la calotte 12 par rapport à celui de la calotte 10 à petit rayon, autrement dit d'augmenter la distance a par rapport à la distance b. L'ouverture d'écoulement 22 représenté en projection sur la figure 4 devient par conséquent, asymétrique par rapport à l'axe central O, mais le courant d'écoulement se formera symétriquement autour de cet axe comme représenté sur la figure 3.

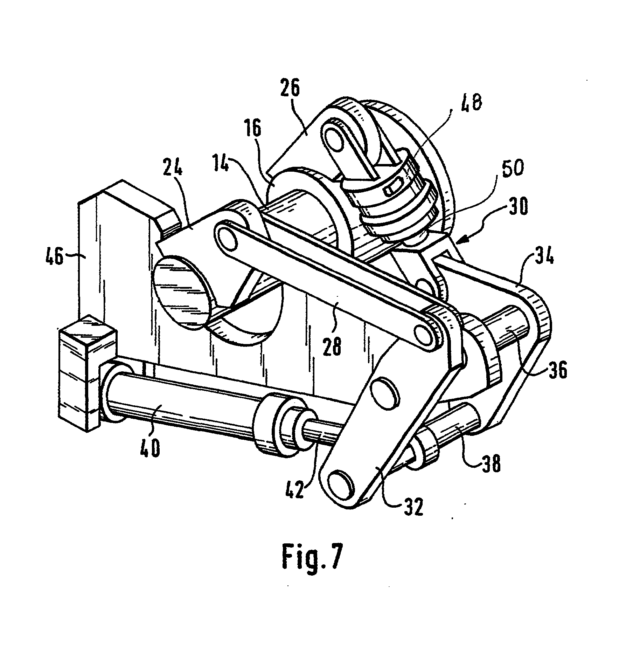

Les moyens mis en oeuvre pour augmenter l'angle d'ouverture du registre 12 seront décrits en référence aux figures suivantes . Toutefois, auparavant, on va brièvement rappeler la description du mécanisme pour actionner le clapet, en référence aux figures 5 à 7, ce mécanisme étant analogue à celui préconisé par le brevet européen susmentionné et auguel on se référera pour de plus amples détails.

Le registre supérieur 10 à petit rayon est solidaire d'un arbre d'entrainement 14 disposé coaxialement à l'intérieur d'un deuxième arbre d'entraînement 16 dont le registre inférieur 12 est solidaire. Ces deux arbres 14 et 16 sont portés par un palier monté dans la tubulure d'écoulement 18. Les deux arbres 14 et 16 peuvent tourner l'un par rapport à l'autre autour de leur axe commun et par rapport à la tubulure 18 grâce à l'interposition de fourreaux non représentés.

Les deux arbres 14 et 16 sont respectivement solidaires de bras 24 et 26 qui sont articulés chacun à l'une des extrémités d'une bielle 28 et 30. Les extrémités opposées de ces deux bielles 28 et 30 sont articulées , à leur tour, respectivement sur l'une des extrémités de deux leviers culbuteurs 32 et 34 montés sur un axe commun 36 parallèle à l'axe de rotation des deux arbres d'entraînement 14 et 16 et susceptibles de pivoter autour de cet axe commun 36. Ces deux leviers culbuteurs 32, 34 sont reliés ensemble , par leurs extrémités opposées, au moyen d'une tige 38 , de sorte que ces deux leviers 32 et 34 doivent forcément pivoter ensemble autour de l'axe 36. Pour augmenter la solidité, il est préférable de souder les leviers 32 et 34 l'un à l'autre au moyens d'entretoises non représentées.

Le pivotement des leviers culbuteurs 32 et 34 est engendré par un vérin hydraulique 40 qui est monté de façon pivotante sur un pivot 44 porté par une plaque de support 46 solidaire de la tubulure 18. L'extrémité de la tige 42 du vérin 40 est traversée par la tige 38 qui relie les deux leviers 32 et 34.

La figure 5 représente le mécanisme en position fermée des clapets tandis que la disposition de la figure 6 résultant de l'extension de la tige 42 du vérin 40 correspond à l'ouverture du clapet par pivotement des bras 24 et 26 en sens opposé.

Selon l'une des particularités de la présente invention, la bielle 30 actionnant le registre 12 à grand rayon est ajustable en longueur. A cet effet, la bielle 30 est conçue sous forme de vérin hydraulique dont le cylindre 48 est articulé au bras 26 et dont la tige 50 est articulée au levier 34 , ou vice versa. Lors de la manoeuvre du clapet, la tige 50 est rentrée dans le cylindre 48 comme représenté sur la figure 6, ce qui a pour effet de raccourcir la longueur de la bielle 30 et d'augmenter l'angle de pivotement du registre 12.

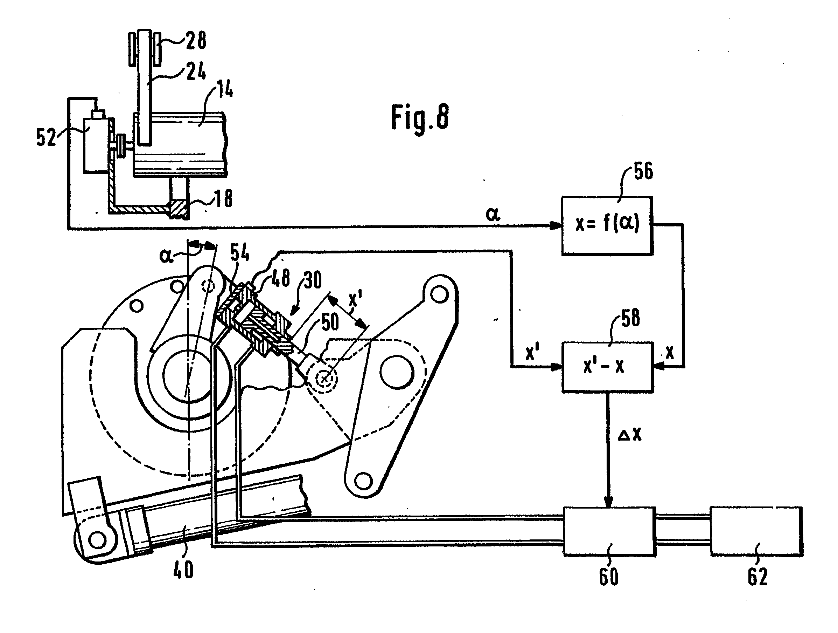

La figure 8 montre un circuit de commande pour l'ajustement de la longueur de la bielle 30 en fonction de la position angulaire du registre 12. Un détecteur de position angulaire 52 connu en soi , est associé à l'arbre 14 pour fournir en permanence la position angulaire $\alpha$ du registre 10 par rapport à une position de référence, par exemple l'axe central O. Ces informations sont transmises à une mémoire 56 dans laquelle on a stocké des informations de consigne pour l'angle d'ouverture optimal du registre 12 en fonction de la position angulaire du registre 10 pour différents types de matériaux. Ces informations résultent d'essais préalables et concernent la longueur de la bielle 30, c'est-à-dire la longueur d'extension X de la tige 50 du vérin incorporé dans la bielle. La mémoire 56 établit donc les valeurs de consigne X de l'amplitude d'extension de la tige 50, en fonction des positions angulaires $\alpha$ mesurées par le détecteur 52. Ces informations sont transmises à un comparateur 58. Celui-ci reçoit également d'un détecteur 54 incorporé dans le cylindre 48 des informations concernant l'amplitude réelle X' de l'extension de la tige 50. Ce comparateur 58 commande une vanne hydraulique 60 qui règle le débit et le sens de circulation du fluide hydraulique entre une pompe 62 et le cylindre 54.

Si le comparateur 58 détecte une différence $\Delta X$ entre la position de consigne X et la position réelle X', la vanne 60 est commandée pour faire circuler le fluide hydraulique dans le sens approprié pour réduire la différence $\Delta X$ et faire correspondre la position réelle X' à la position de consigne X. Par exemple, si le registre 12 n'est pas suffisamment ouvert , X' sera supérieur à X. Dans ce cas, la vanne 60 enverra le fluide hydraulique dans le compartiment de la tige de piston pour rentrer la tige 50 et réduire l'amplitude de X' jusqu'à ce qu'il y ait égalité avec la valeur de consigne X.

Le dispositif représenté sur la figure 8 permet deux modes de fonctionnement différents. Il est possible d'ouvrir le registre 12 au moyen du cylindre 54, sans bouger le registre 10, jusqu'à sa position de consigne mémorisée en 56 et sans être fonction de l'angle d'ouverture $\alpha$. Une fois que la position de consigne du registre 12 est atteinte, l'action sur le cylindre 54 est interrompue et le vérin hydraulique 40 est actionné pour déplacer les deux registres 10 et 12 en synchronisme et en sens opposé. Dans le deuxième mode d'opération, le vérin 40 est actionné dès le départ pour ouvrir les deux registres 10 et 12 en même temps. Toutefois, la vitesse d'ouverture du registre 12 est augmentée progressivement au moyen du cylindre 54 et en fonction de l'angle α d'ouverture du registre 10, suivant les valeurs de consigne mémorisées en 56. A partir de la position d'ouverture maximale du registre 12 comme représenté sur la figure 3, on peut, pour pouvoir ouvrir le registre 10 complètement, actionner le vérin 54 en sens inverse pour éviter que le registre 12 ne bute contre la tubulure 18.

L'un des avantages du dispositif préconisé par la présente invention est qu'il est adaptable à des mécanismes existants du genre de celui décrit dans le brevet européen précité, sans modification d'autres éléments mécaniques.

Un autre avantage est qu'il est adaptable aux caractéristiques de différentes matières à enfourner.

Un autre avantage est celui de permettre à l'opérateur d'intervenir sur le centrage du courant d'écoulement pendant que le haut fourneau est en marche, c'est-à-dire l'opérateur peut déterminer par des appareils de mesure appropriés le degré d'uniformité de la charge déposée dans le four et intervenir en conséquence au niveau du clapet de dosage.

Il reste finalement à signaler que l'autre bielle peut également être conçue de façon téléscopique.

## Revendications

1. Dispositif de réglage de l'ouverture d'écoulement d'une tubulaire verticale, comprenant un clapet de dosage constitué de deux registres rotatifs (10, 12) en forme de calotte sphérique ou cylindrique, pourvus de découpes symétriques par rapport à l'axe d'une ouverture centrale définie par le mouvement des registres (10, 12) et de leur découpe, ces registres étant solidaires de deux arbres d'entraînement (14, 16) disposés l'un coaxialement par rapport à l'autre et logés dans des paliers de la tubulure et un mécanisme pour actionner, par pivotement autour de leur axe commun, chacun des registres (10, 12) en synchronisme et en sens opposé, et comprenant deux bras (24, 26) respectivement solidaires de chacun des deux arbres (14, 16) et articulé chacun, par l'intermédiaire d'une bielle (28, 30) sur un levier culbuteur (32, 34), monté sur un axe de pivotement (36) parallèle à l'axe commun des deux arbres (14, 16), ces leviers culbuteurs (32, 34) étant reliés à un dispositif d'entraînement pour les faire pivoter autour de leur axe de pivotement (36) et dans lequel l'articulation entre l'un des leviers culbuteurs (34) et sa bielle (30) est décalée angulairement autour dudit axe de pivotement (36) par rapport à l'articulation entre l'autre levier culbuteur (32) et sa bielle (28), caractérisé en ce que l'une des bielles (28, 30) est ajustable en longueur.

2. Dispositif selon la revendication 1, caractérisée en ce que l'ajustement de ladite bielle (28, 30) est réalisé par un vérin hydraulique incorporé dans ladite bielle.

3. Dispositif selon la revendication 2, caractérisé par un circuit de commande comprenant un detecteur (52) de la position angulaire du registre dont la bielle n'est pas ajustable, un détecteur (54) de la position réelle du vérin (50, 54), un comparateur (58) pour comparer la position réelle du vérin à une position de consigne mémorisée en fonction des positions angulaires fournies par le détecteur (52), une vanne hydraulique (60) commandée en fonction du résultat de la comparaison effectuée par le comparateur (58) pour actionner le vérin jusqu'à ce que la position réelle de celui-ci corresponde à la position de consigne.

## Patentansprüche

1. Vorrichtung zum Einstellen der Ausflussöffnung eines eine Dosierklappe begreifenden vertikalen Rohrstutzens, wobei die Dosierklappe aus zwei rotierenden Registern (10, 12) besteht, welche in Form von kugeligen oder von zylindrischen Kalotten aufweisen, welche mit Ausschnitten versehen sind die symmetrisch zu der Achse einer zentralen, durch die Bewegung der Register (10, 12) und ihrer Ausschnitte definierten Öffnung sind und welche mit zwei Antriebswellen (14, 16) verbunden sind, wovon eine koaxial zu der anderen angeordnet ist und wo beide in Lagern des Auslaufrohrstutzens untergebracht sind, wobei ein Mechanismus ein jedes der beiden Register (10, 12) durch Schwenken um ihre gemeinsame Achse bestätigt, dies sychron und in entgegengesetzter Richtung, und wobei der Mechanismus zwei Gelenkarme (24, 26) begreift wovon einerseits jeder mit einer der beiden Antriebswellen (14, 16) verbunden ist und andererseits jeder für sich über Zwischenglieder (28, 30) an Kipphebeln (32, 34) angelenkt ist, welche auf einer zu der gemeinsamen Achse der beiden Antriebswellen (14, 16) parallelen Schwenkachse (36) angebracht sind und welche mit einer Antriebsvorrichtung verbunden sind, sodass die Kipphebel (32, 34) um ihre Schwenkachse (36) gedreht werden können, dabei ist das Schwenkgelenk zwischen einem der Kipphebel (34) und seinem Zwischenglied (30) winklig um die besagte Schwenkachse (36) versetzt im Vergleich zu dem Schwenkgelenk zwischen dem anderen Kipphebel (32) und seinem Zwischenglied (28), dadurch gekennzeichnet, dass die Länge eines der Zwischenglieder (28, 30) eingestellt werden kann.

2. Vorrichtung gemäss dem Anspruch 1 dadurch gekennzeichnet, dass die Längenanpassung des besagten Zwischengliedes (28, 30) mit Hilfe eines in dem besagten Zwischenglied inbegriffenen hydraulischen Zylinders bewerkstelligt wird.

3. Vorrichtung gemäss dem Anspruch 2, gekennzeichnet durch einen Steuerungskreis begreifend einen die Winkelstellung des Registers mit dem nicht längenverstellbaren Zwischenglied messenden Detektor (52) einen die wirkliche Stellung des Zylinders (50, 54) erfassenden Detektor (54), einen Vergleicher (58) zur Gegenüberstellung der wirklichen Stellung des Zylinders mit einer Vorgabestellung, welche in Funktion der von dem Detektor (52) gelieferten Winkelstellungen gespeichert ist, einen hydraulischen Zylinder (60), welcher in Funktion des von dem Vergleicher (58) durchgeführten Vergleichsresultates gesteuert wird und den Zylinder betätigt, bis seine wirkliche Stellung der Vorgabestellung entspricht.

## Claims

1. Apparatus for regulating the flow opening of a vertical tube comprising a metering valve consisting of two rotary registers (10, 12) shaped as spherical or cylindrical domes and provided with cutouts which are symmetrical in relation to the axis of a central opening defined by the movement of the registers (10, 12) and of their cutouts, said registers being fastened to two drive shafts (14, 16) disposed coaxially in relation to one another and received in the bearings of the tube and a mechanism to operate by pivoting about their common axis each of the registers (10, 12) synchronously and in opposite directions and comprising two arms (24, 26) fastened respectively to the two shafts and articulated by means of a connecting rod (28, 30) on a rocking lever (32, 34) mounted on a pivot (36) axis parallel to the common axis of the two shafts (14, 16), said rocking levers (32, 34) being connected to a drive device pivoting them about their pivot axis (36), and in which the articulation between one of the rocking levers (34) and its connecting rod (30) is angularly offset about said pivot axis (36) in relation to the articulation between the other rocking lever (32) and its connecting rod (28).

2. Apparatus according to claim 1, characterized in that the adjustment of said connecting rod (28, 30) is effected with the aid of a hydraulic ram incorporated in said connecting rod.

3. Apparatus according to claim 2, characterized by a control circuit comprising a detector (52) for the angular position of the register whose connecting rod is not adjustable, a detector (54) for the actual position of the ram (50, 54), a comparator (58) comparing the actual position of the ram with a stored set position in dependence on the angular positions indicated by the detector (52), a hydraulic valve (60) controlled in dependence on the result of the comparison made by the comparator (58) to operate the ram until the actual position of the latter corresponds to the set position.

Fig.1

Fig.2

Fig. 3

Fig. 4

Fig. 5

Fig. 6

Fig.7

Fig.8